# EUROPEAN PATENT SPECIFICATION

(11) **EP 3 344 491 B1**
(45) Date of publication and mention of the grant of the patent: **08.01.2020**
(21) Application number: 16759808.5
(22) Date of filing: 02.09.2016
(51) Int. Cl.: B60N 2/16, B60N 2/427, B60N 2/22

(54) **VEHICLE SEAT ASSEMBLY**
FAHRZEUGSITZANORDNUNG
ENSEMBLE SIÈGE DE VÉHICULE

(30) Priority: 04.09.2015 GB 201515703
(43) Date of publication of application: 11.07.2018
(73) Proprietor: Jaguar Land Rover Limited, Coventry, Warwickshire CV3 4LF (GB)
(72) Inventor: CHATWIN, Andrew, Coventry Warwickshire CV3 4LF (GB); GRIMES, Oliver, Coventry Warwickshire CV3 4LF (GB); BASTIEN, Christophe, Coventry CV3 4LF Warwickshire (GB)
(74) Representative: Westcott, Matthew John George
(86) International application number: PCT/EP2016/070763
(87) International publication number: WO 2017/037258

(56) References cited:
- WO-A1-2012/084158
- WO-A2-2008/017794
- GB-A- 2 345 244

## Description

### TECHNICAL FIELD

The present disclosure relates to a vehicle seat assembly. The present disclosure relates particularly, but not exclusively to a vehicle seat assembly; and to a vehicle having a vehicle seat assembly.

### BACKGROUND

A conventional vehicle seat assembly comprises a seat base and a seat squab (backrest). The seat squab is typically pivotally mounted to the seat base and a recline control mechanism is provided to adjust the recline angle of the seat squab. It is known to provide energy absorption regions but these may prove difficult to tune effectively to establish load paths for crash energy absorption without load path failure. GB-A-2345244 relates to a backrest adjusting device for a vehicle seat.

It is against this backdrop that the present invention has been conceived.

### SUMMARY OF THE INVENTION

Aspects and embodiments of the present invention relate to a vehicle seat assembly; and to a vehicle having a vehicle seat assembly as claimed in the appended claims.

According to a further aspect of the present invention there is provided a vehicle seat assembly comprising:
a chassis;
a backrest support pivotally mounted to the chassis;
a recline control mechanism comprising a pinion gear and a drive rack; and
reaction means for maintaining engagement of the drive rack with the pinion gear;
wherein the recline control mechanism comprises a deformable link connected to the drive rack for controlling the transmittal of a force from the backrest support to the chassis. In use, the deformable link functions as an energy absorption means. The deformable link manages loads applied to the vehicle seat assembly during a dynamic collision event. At least in certain embodiments, the deformable link reduces acceleration magnitudes experienced by a seat occupant, typically those associated with movement of the backrest support. There may be a reduction in a rebound velocity (due to permanent deformation of the deformable link) which, at least in certain embodiments, may reduce forces responsible for whiplash injuries. The deformable link is disposed between the drive rack and the backrest support.

The vehicle seat assembly may comprise more than one of said deformable links. For example, first and second deformable links may be arranged parallel to each other. The first and second deformable links may be disposed on each side of the drive rack. This arrangement of the first and second deformable links may provide improved stability.

The deformable link may be predisposed to deform in a controlled manner. The deformable link may be rigid (i.e. does not deform) up until a design load threshold. The deformable link may be adapted to deform in a controlled manner to absorb energy in the event of a collision. Upon application of a load greater than or equal to a design load threshold, the deformable link may be configured to undergo plastic deformation. At least in certain embodiments, the deformable link may undergo progressive plastic deformation upon application of a load exceeding the design load threshold. At least in certain embodiments the deformation of the deformable link may be tuneable.

The drive rack may be fixedly mounted to the deformable link. The drive rack may be fastened to the deformable link. In certain embodiments, the drive rack may be formed integrally with the deformable link.

The deformable link may comprise one or more elongated sections. The deformable link may comprise a plurality of said elongated sections. The elongated sections may be in the form of arms or fingers. The elongated sections may be arranged to extend radially outwardly, for example from a pivot axis of the backrest support. One or more of the elongated sections may be substantially rectilinear. In certain embodiments, one or more of the elongated sections may be curved. The deformable link may comprise from two to twenty (inclusive) of said elongated sections, for example five, ten or fifteen elongated sections. The profile of each elongated section may be adapted to determine the combined load required to plastically deform the deformable link. One or more elongated apertures may be formed in the deformable link. The deformable link may be a metal plate.

The chassis may comprise a first lateral frame member. The deformable link may be disposed adjacent to said first lateral frame member. The deformable link and the first lateral frame member may be arranged in a side-by-side arrangement. The deformable link may extend substantially parallel to the first lateral frame member. The chassis may be comprised in a base assembly. The base assembly may comprise a seat cushion pan which is mounted to the chassis.

The recline control mechanism may comprise an actuator for drivingly rotating the pinion gear. The deformable link may limit the load transmitted to the actuator. The actuator may be mounted to the first lateral frame member. The actuator may be manually operated. In certain embodiments, the actuator may comprise an electric drive motor.

The vehicle seat assembly may comprise at least one constraining member. The constraining member may be suitable for constraining out-of-plane deformation of the deformable link. The constraining member may be disposed adjacent to the deformable link. The constraining member may extend substantially parallel to the deformable link.

The deformable link may be disposed between the at least one constraining member and the first lateral frame member. The first lateral frame member may inhibit out-of-plane deformation of the deformable link in a first direction. The at least one constraining member may inhibit out-of-plane deformation of the deformable link in a second direction.

The backrest support may be pivotable about a pivot axis. The drive rack may have a part-circular (arcuate) profile. A centre of curvature of the drive rack may be arranged coincident with the pivot axis of the backrest support.

The backrest support may pivot about the pivot axis to change a pivot angle of the backrest support relative to the chassis. The recline angle of the backrest support may thereby be adjusted by a seat occupant. In certain embodiments, the pivot axis may be disposed below an H-Point of the seat occupant. The pivoting motion of the backrest support may cause the backrest support to move longitudinally relative to the seat occupant. If the backrest support pivots forwards, the backrest support may travel towards the occupant (in a longitudinal direction) at the height of the H-Point. Conversely, if the backrest support pivots backwards, the backrest support may travel away from the occupant (in a longitudinal direction) at the height of the H-Point. As the chassis remains static while the backrest support pivots, the effective length of the seat length may be reduced. This may be advantageous for shorter occupants since they generally have a more upright backrest.

The reaction means may comprise a reaction surface for cooperating with the drive rack. The reaction surface and the drive rack may have complementary surfaces. The reaction surface may be configured to support the drive rack, thereby helping to maintain engagement of the drive rack and the pinion gear. The reaction surface may have an arcuate profile. A centre of curvature of the reaction surface may be coincident with a pivot axis of the backrest support. The at least one constraining member may form the reaction means.

The deformable link may be configured to deform upon application of a predetermined load or recliner moment.

The vehicle seat assembly may comprise means for limiting pivoting movement of the backrest support relative to the chassis. The chassis may comprise a second lateral frame member having a projection which defines the stop member. The pivot limiting means may be arranged to engage with said projection to limit pivoting movement. The pivot limiting means may comprise a bracket having one or more prongs for cooperating with the projection.

The backrest support may comprise at least one beam, a front shell member and a rear shell member. The front shell member may be fastened to a front surface of the at least one beam; and/or the rear shell member may be fastened to a rear surface of the at least one beam. For example, the front shell member and/or the rear shell member may be bonded or thermo-welded to the at least one beam. The at least one beam may extend vertically within the vehicle seat assembly. The front shell member and the rear shell member may be bonded or thermo-welded to each other, for example along an outer edge. In certain embodiments, the front and rear shell members may be joined by over-moulding one of said front and rear shell members over the other of said front and rear shell members.

The backrest support may comprise first and second beams. The first and second beams may be centrally located within the backrest support to form a central loadbearing structure. This arrangement may provide additional knee room for a vehicle occupant seated behind the vehicle seat assembly.

The at least one beam may be moulded from a short or chopped fibre reinforced material. The material can, for example, be a thermoplastic composite. A mounting plate may be mounted to each vertical beam. The mounting plate may pivotally mount the backrest support.

The front shell member may be moulded from a continuous fibre reinforced material; and/or the rear shell member may be moulded from a continuous fibre reinforced material. At least in certain embodiments the front shell member and/or the rear shell member can withstand tension and/or compression loading, thereby helping to reinforce the mounting arrangement, for example if a torque is applied to pivot the backrest support. The continuous fibres in the front shell member and/or the continuous fibres in the rear shell member may be aligned in a direction corresponding to a length of the at least one beam (which may correspond to an orientation of the fibres within the at least one beam).

The front shell member and/or the rear shell member may comprise additional layers of the fibre reinforced material to withstand bending/twisting of front shell member and/or the rear shell member, for example of bolster supports. The fibres in the additional layers may be oriented at an angle to the orientation of the fibres in the at least one beam.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment may be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the present invention will now be described, by way of example only, with reference to the accompanying Figures, in which:
Figure 1A shows a vehicle seat assembly in accordance with a first embodiment of the present invention;
Figure 1B is a schematic illustration of a vehicle incorporating the vehicle seat assembly shown in Figure 1A;
Figure 2A shows a partially exploded perspective view of the support frame of the vehicle seat assembly shown in Figure 1A;
Figure 2B shows an enlarged view of the support frame shown in Figure 2A;
Figure 2C shows a perspective view of the support frame shown in Figure 2A with the base assembly omitted;
Figure 2D shows a perspective view of the support frame shown in Figure 2C with the height rise actuator omitted;
Figure 3 shows a sectional view through the concentric torsion tubes providing height rise and recline functions;
Figure 4A shows a perspective view of a rear shell member of the vehicle seat shown in Figure 1A;
Figure 4B shows the backrest support with the rear shell member shown in Figure 4A omitted;
Figure 5 shows an enlarged view of the support frame shown in Figure 2 showing a deformable link in accordance with an embodiment of the present invention;
Figure 6 shows a perspective view of the mounting arrangement of the backrest support to the seat chassis;
Figure 7 shows an exploded view of the mounting arrangement shown in Figure 6;
Figure 8 shows a perspective view of the mounting arrangement with the deformable link of Figure 5 in a deformed condition;
Figure 9 shows a cross sectional view of the mounting arrangement with the deformable link as shown in Figure 5;
Figure 10 shows an isometric view of the mounting arrangement with the deformable link as shown in Figure 5;
Figure 11A shows the mounting arrangement with a deformable link in accordance with a second embodiment of the present invention;
Figure 11B shows the mounting arrangement with the deformable link of Figure 11A in a deformed condition;
Figure 12A shows the mounting arrangement of Figure 11A including detent features;
Figure 12B shows the mounting arrangement of Figure 11B including detent features;
Figure 13 shows a cross sectional view of the mounting arrangement with the deformable link as shown in Figures 11A and 11B; and
Figure 14 shows an isometric view of the mounting arrangement with the deformable link as shown in Figures 11A and 11B.

### DETAILED DESCRIPTION

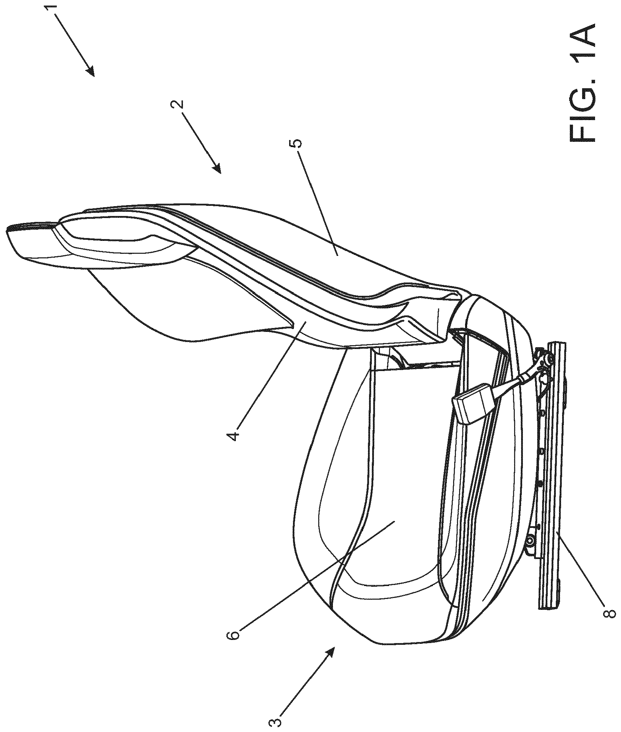

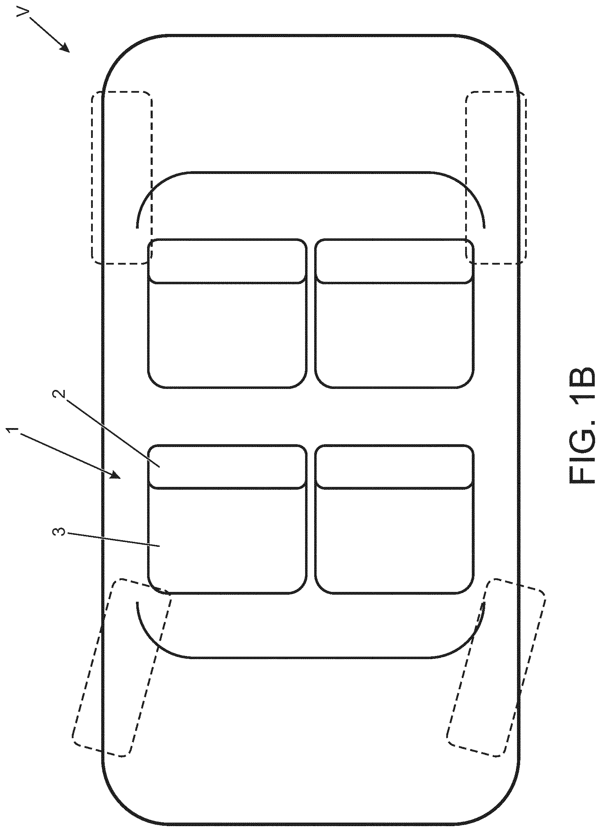

A vehicle seat assembly 1 in accordance with an embodiment of the present invention is shown in Figure 1A. The vehicle seat assembly 1 is for use in an automotive vehicle V, as shown in Figure 1B. It will be appreciated that the vehicle seat assembly 1 may be used in other types of vehicle.

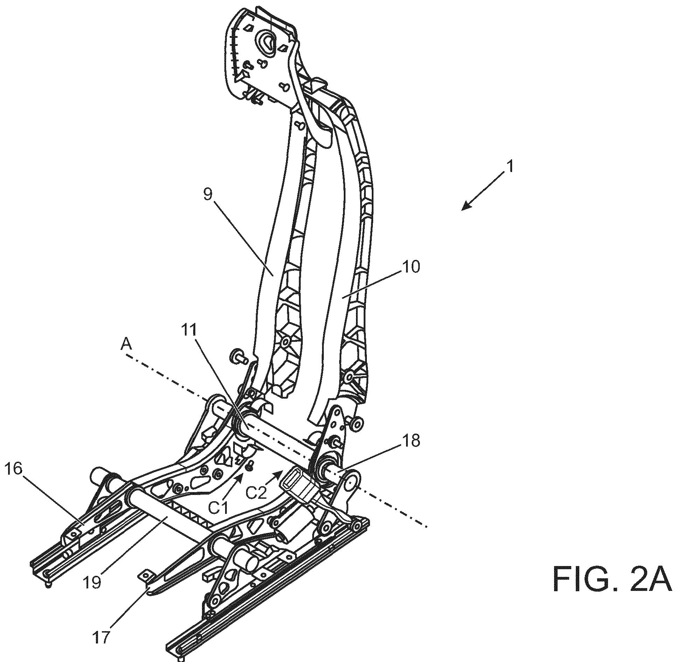

The vehicle seat assembly 1 comprises a squab (backrest) assembly 2 and a base assembly 3. The squab assembly 2 comprises a padded squab 4 mounted to a backrest support 5. The base assembly 3 comprises a seat cushion 6 supported on a seat cushion pan (not shown) mounted to a chassis 7. The squab assembly 2 is pivotally mounted to the base assembly 3 and pivots about a pivot axis A. The pivot axis A is disposed below a H-point of a seat occupant (i.e. below the theoretical location of a pivot point between the torso and upper leg of the seat occupant). The chassis 7 is slidably mounted to a pair of parallel rails 8 fixedly mounted to a floor of the vehicle V. A perspective view of the backrest support 5 and the chassis 7 is shown in Figures 2A-D.

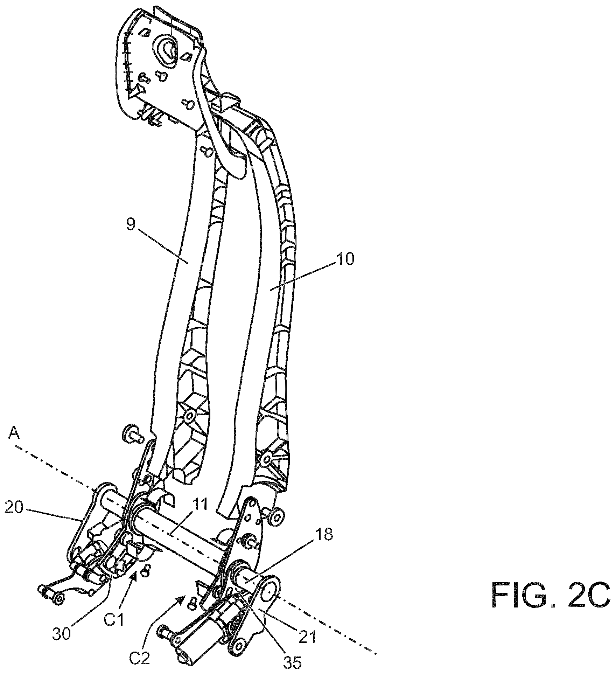

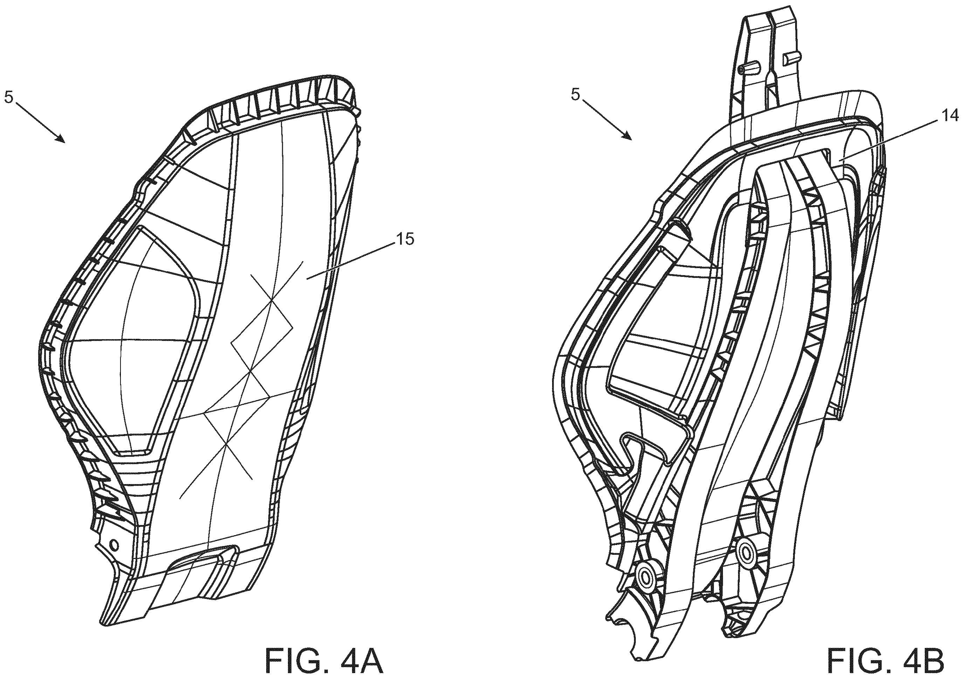

The backrest support 5 comprises first and second beams 9, 10 fixedly mounted to respective ends of a first torsion tube 11. The first and second beams 9, 10 each have an I-cross-section and are moulded from a short-fibre reinforced thermoplastic material. In use, the first and second beams 9, 10 extend generally vertically within the squab assembly 2. As shown in Figures 2A and 2C, the first and second beams 9, 10 are mounted to the first torsion tube 11 by first and second collars C1, C2 each formed from first and second opposing metal brackets having an internal semi-circular section. First and second mounting plates 12, 13 are mounted at the lower end of the first and second beams 9, 10, respectively. The first and second mounting plates 12, 13 are metal plates arranged substantially parallel to each other to support the backrest support 5. The backrest support 5 also comprises a front shell member 14 and a rear shell member 15. The front and rear shell members 14, 15 are moulded from a long-fibre reinforced thermoplastic material and fastened to the respective front and rear surfaces of the first and second beams 9, 10, for example by bonding or thermo-welding. The front and rear shell members 14, 15 thereby form a load-carrying (structural) shell which is integrated with the first and second beams 9, 10. A rear perspective view of the rear shell member 15 is shown in Figure 4A; and a rear perspective of the squab assembly 2 with the rear shell member 15 omitted is shown in Figure 4B.

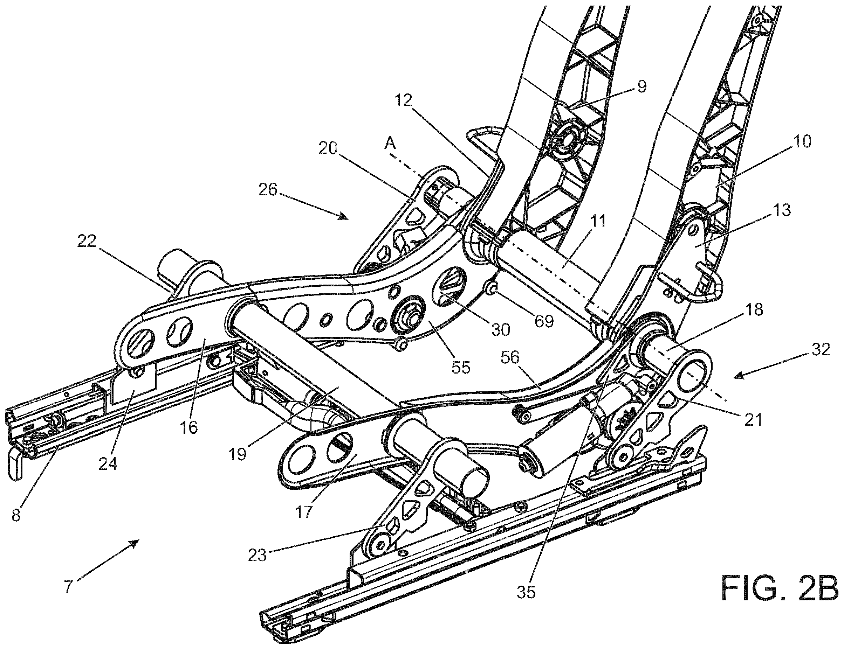

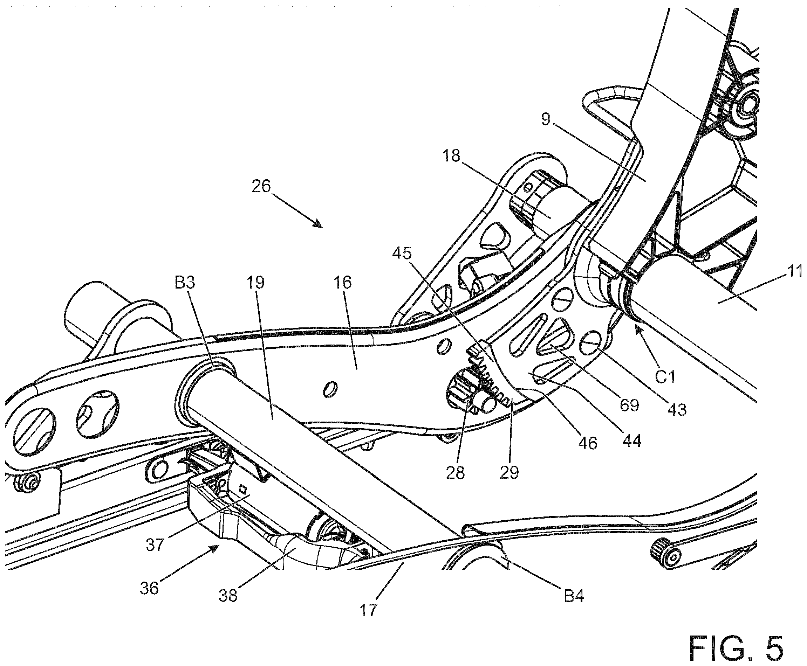

As shown in Figures 2A and 2B, the base assembly 3 comprises opposing first and second lateral members 16, 17, a second torsion tube 18 and a third torsion tube 19. The second torsion tube 18 is rotatably mounted in first and second annular bearings B1, B2 disposed in the first and second lateral members 16, 17. The third torsion tube 19 is rotatably mounted in third and fourth annular bearings B3, B4 (visible in Figure 5) disposed in the first and second lateral members 16, 17. First and second rear mounting arms 20, 21 are fixedly mounted at the respective ends of the second torsion tube 18. Similarly, first and second front mounting arms 22, 23 are fixedly mounted at the respective ends of the third torsion tube 19. The front and rear mounting arms 20-23 are pivotally connected to first and second carrier elements 24, 25 slidably mounted to the rail 8. The first and second lateral members 16, 17, the front and rear mounting arms 20-23, and the first and second carrier elements 24, 25 collectively form first and second four-bar link assemblies on respective sides of the chassis 7. By adjusting the geometry of the four-bar link assemblies, the rise height of the vehicle seat assembly 1 may be adjusted. Thus, the seat cushion 6 may be raised and lowered to suit an individual's preferences.

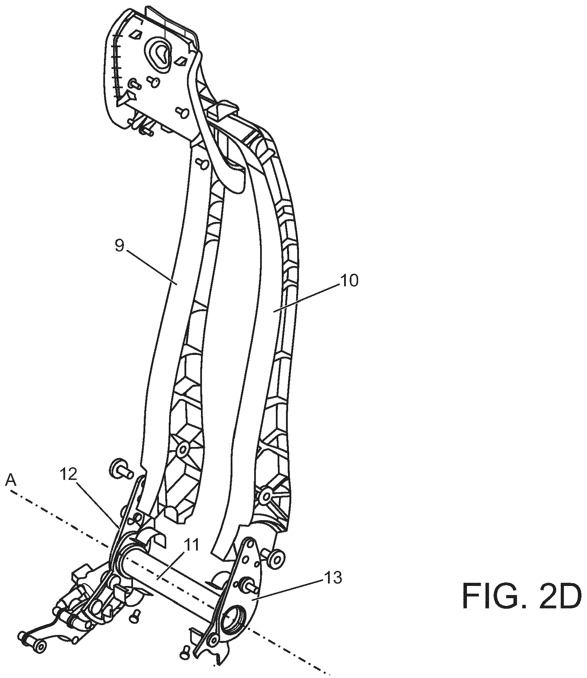

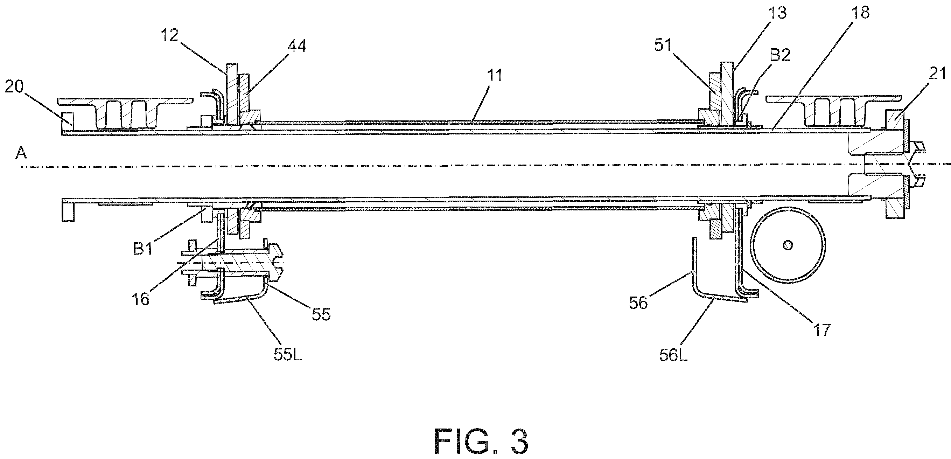

With reference to Figures 2C and 2D, the squab assembly 2 is pivotally mounted to the base assembly 3 to enable adjustment of a recline angle of the squab assembly 2. The squab assembly 2 is pivotable about the pivot axis A. In the present embodiment, the first torsion tube 11 and the second torsion tube 18 are arranged concentrically about the pivot axis A. A transverse sectional view through the first and second torsion tubes 11, 18 is shown in Figure 3. The first and second torsion tubes 11, 18 are rotatable independently of each other about the pivot axis A. The first torsion tube 11 is located externally of the second torsion tube 18 to enable the backrest support 5 to pivot relative to the chassis 7.

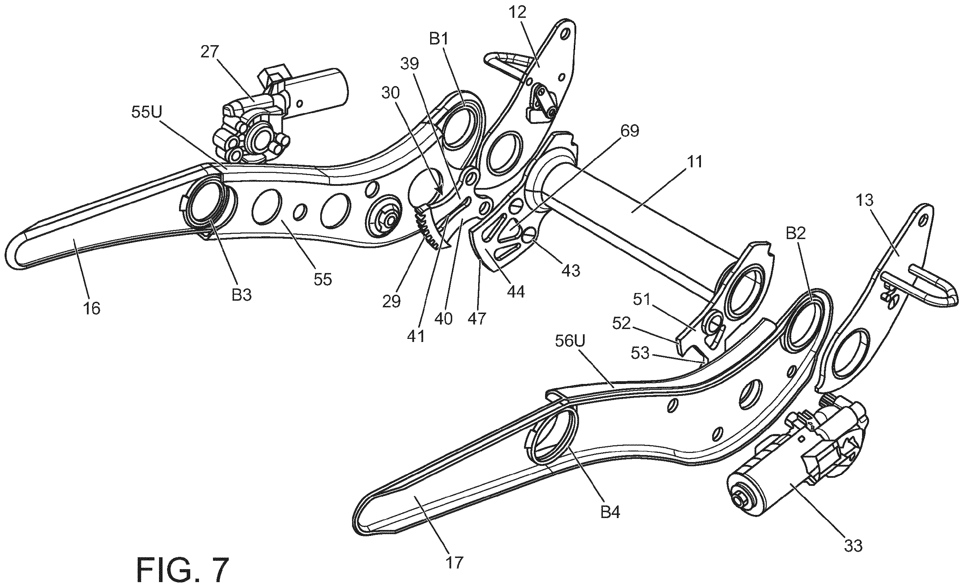

With reference to Figures 5, 6 and 7, the vehicle seat assembly 1 comprises a recline control mechanism 26 for controlling a recline angle of the squab assembly 2. The recline control mechanism 26 comprises a first actuator in the form of a first drive motor 27 (shown in Figure 7). The first drive motor 27 is a reversible electric motor which is controlled in dependence on a control signal received from a seat control unit (not shown). As shown in Figure 7, the first drive motor 27 is mounted to the first lateral member 16 and comprises a first output pinion gear 28 having a toothed profile. The first output pinion gear 28 is configured to engage a first drive rack 29 fixedly mounted to a deformable link 30 connected to the first torsion tube 11. The first drive rack 29 has a part-circular (arcuate) profile having a centre of curvature which is disposed on the pivot axis A. An outer face of the first drive rack 29 defines a series of teeth which mesh with the first output pinion gear 28. The recline angle of the squab assembly 2 is adjustable by controlling operation of the first drive motor 27. The rotation of the first output pinion gear 28 in a first direction increases the recline angle; and the rotation of the first output pinion gear 28 in a second direction reduces the recline angle.

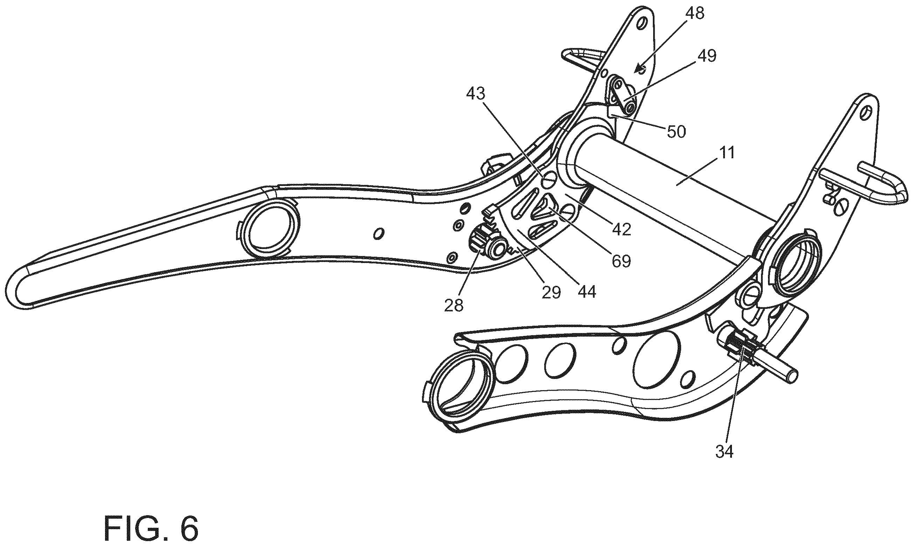

The vehicle seat assembly 1 comprises a rise height control mechanism 32 for controlling a rise height of the base assembly 3. The rise height control mechanism 32 comprises a second actuator in the form of a second drive motor 33 (see Figure 7) is mounted to the second lateral member 17. The second drive motor 33 is a reversible electric motor which is controlled in dependence on a control signal received from the seat control unit (not shown). As shown in Figures 6 and 7, the second drive motor 33 comprises a second output pinion gear 34 having a toothed profile. The second output pinion gear 34 is configured to engage a second drive rack (not shown) fixedly mounted to a drive arm 35 (shown in Figures 2B and 2C). The second drive rack has a part-circular (arcuate) profile having a centre of curvature which is disposed on the pivot axis A. As shown in Figures 2B and 2C, the drive arm 35 is fixedly mounted to the second torsion tube 18. Thus, the second drive motor 33 may be operated to adjust the angle of the first and second rear mounting arms 20, 21; and the angle of the first and second front mounting arms 22, 23. The geometry of the base assembly 3 may thereby be modified to adjust the rise height. The rotation of the second output pinion gear 34 in a first direction increases the rise height of the vehicle seat assembly 1; and the rotation of the second output pinion gear 34 in a second direction reduces the rise height of the vehicle seat assembly 1.

The vehicle seat assembly 1 comprises a travel control mechanism 36 for controlling the longitudinal position of the base assembly 3. As shown in Figure 5, the travel control mechanism 36 comprises a third actuator in the form of a third drive motor 37 mounted to a cross member 38 extending transversely between the first and second carrier elements 24, 25. The third drive motor 37 is a reversible electric motor which is controlled in dependence on a control signal received from the seat control unit (not shown). The third drive motor 37 is operable to adjust a longitudinal travel position of the vehicle seat assembly 1 along the rails 8. The third drive motor 37 may, for example, drive a third output pinion (not shown) which engages a third drive rack (not shown). In this arrangement, the third drive rack may be a linear drive rack fixedly mounted to the rails 8.

The vehicle seat assembly 1 may optionally also include an incline control mechanism for controlling an incline of the base assembly 3. The incline control mechanism is not shown in the present embodiment.

The deformable link 30 is adapted to deform in a controlled manner to absorb energy in the event of a collision. In the present embodiment, the deformable link 30 is a metal plate. The deformable link 30 is rigid (i.e. cannot be deformed) upon application of loads up to a design load threshold. Upon application of a load exceeding the design load threshold, the deformable link 30 is configured to undergo progressive plastic deformation. As shown most clearly in Figure 7, the deformable link 30 comprises first and second elongated sections 39, 40 separated by an elongated aperture 41. The first and second elongated sections 39, 40 in the present embodiment have concave outer edges. The profile of the deformable link 30 may be adapted to tune its energy absorption characteristics. As outlined above, the deformable link 30 is connected to the second torsion tube 18. In particular, the deformable link 30 is mounted to a transfer bracket 42 fixedly mounted to a first end of the second torsion tube 18. A pair of bolts 43 mounts the deformable link 30 to the transfer bracket 42. In use, the transfer bracket 42 transmits torque applied by the first output pinion gear 28 to the first torsion tube 11 to adjust the recline angle of the squab assembly 2. The deformable link 30 is disposed adjacent to the first lateral member 16 in a side-by-side configuration. The transfer bracket 42 extends to form a constraining member 44 disposed alongside the deformable link 30. The constraining member 44 may comprise at least one aperture 69. The constraining member 44 may be disposed inboard of the deformable link 30 and extends substantially parallel to the first lateral member 16. The term inboard is used herein to refer to the position in the vehicle seat assembly 1 nearer to a longitudinal centre line of the vehicle V. In use, the constraining member inhibits or prevents out-of-plane deformation of the deformable link 30, primarily in an inwards direction.

The first drive rack 29 is connected to the deformable link 30. The first drive rack 29 may be formed integrally with the deformable link 30 or may be fixedly mounted thereto, for example by welding. The width of the first drive rack 29 may optionally be greater than that of the deformable link 30 to form a stepped section 45. The first drive rack 29 defines a cooperating surface 46 for cooperating with a reaction surface 47 defined by a leading edge of the constraining member 44. The cooperating surface 46 and the reaction surface 47 have complementary part-circular (arcuate) profiles each having a centre of curvature coincident with the pivot axis A. If the deformable link 30 is deformed, the reaction surface 47 is operative to maintain the first drive rack 29 in engagement with the first output pinion gear 28.

In a first embodiment, as shown in Figures 4 to 9, the first drive rack 29 is formed integrally with the deformable link 30. The deformable link 30 can be mounted to the constraining member 44, for example, by a pair of bolts 43.

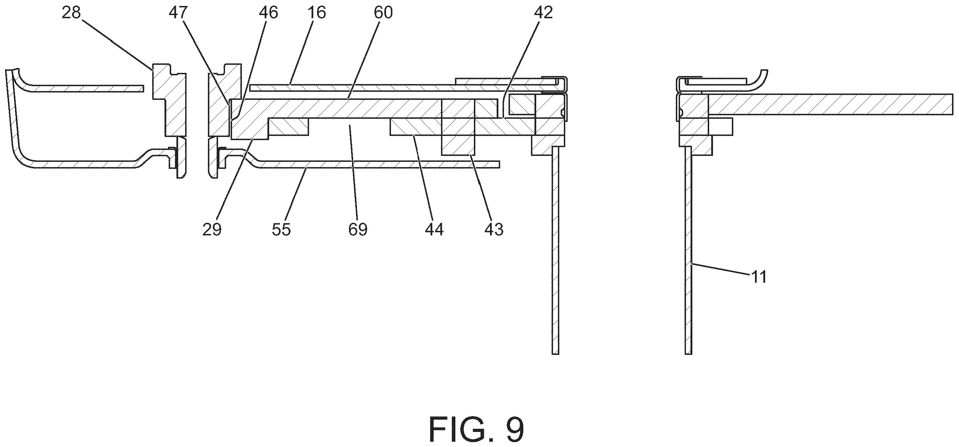

Figure 9 shows a cross section of the arrangement of Figure 4 wherein the first drive rack 29 is formed integrally with the deformable link 30, forming a deformable link member 60. The constraining member 44 is disposed inboard the deformable link member 60. The leading edge of the constraining member 44 defines a reaction surface 47 for cooperating with cooperating surface 46 defined by an edge of the deformable link member 60 that aligns adjacent to the leading edge of the constraining member 44. It is shown in Figure 9 that the deformable link member 60 abuts the first output pinion gear 28.

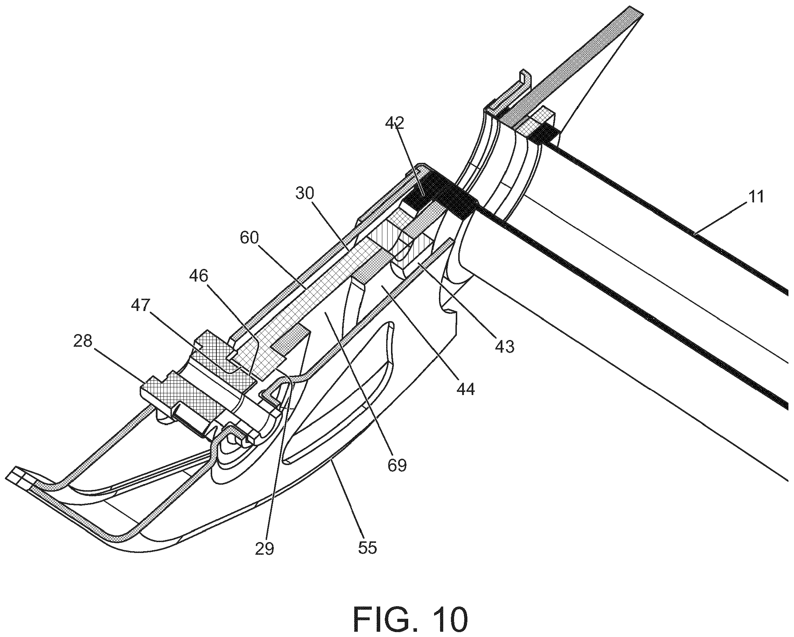

Figure 10 shows an isometric view of the arrangement of Figure 9 including guard member 55 which surrounds the assembly. The guard member 55 may limit the arcuate motion of the constraining member 44 and/or limit out-of-plane deformation of the deformable link 30. The guard member 55 may be a single member or may be modular. In some examples, seat members may define at least part of the guard member 55.

It will be appreciated that guard member 55, as shown in Figure 10, is the guard member that corresponds to the first lateral frame member 16 and that a guard member which corresponds to the second lateral frame member may be a substantially mirror image of guard member 55 as shown in Figure 10.

In the present embodiment, the transfer bracket 42 is configured to cooperate with a latching mechanism 48 provided on the first mounting plate 12. The latching mechanism 48 comprises a movable pawl 49 for releasably engaging a detent 50 formed in an upper portion of the transfer bracket 42. The latching mechanism 48 allows the squab assembly 2 to be selectively decoupled from the base assembly 3 to pivot forwards. This decoupling arrangement is typically employed to facilitate ingress to a rear seat of the vehicle V, for example in a coupe body style, but the latching mechanism 48 may be omitted if this functionality is not required. In certain embodiments, a second latching mechanism may be provided on the second mounting plate 13.

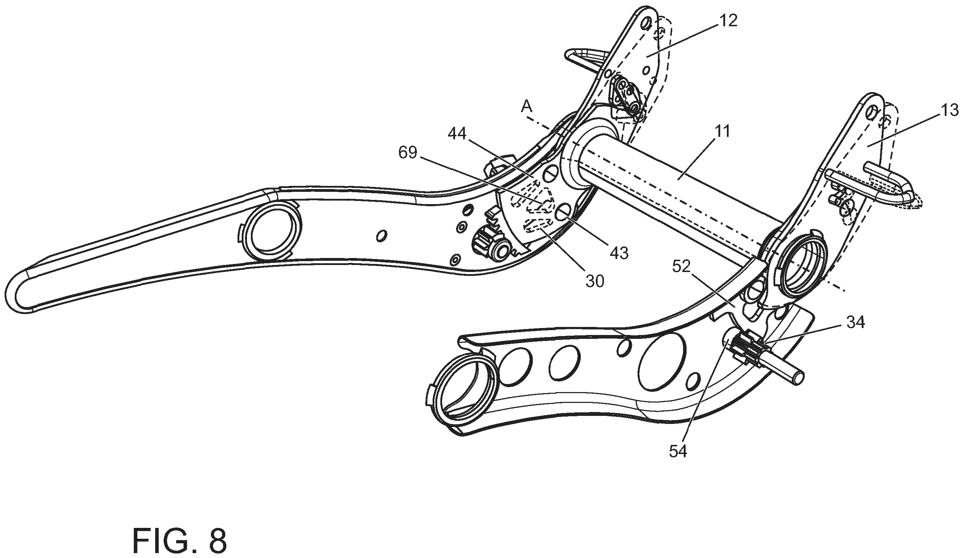

A pivot bracket 51 is fixedly mounted to a second end of the first torsion tube 11 for limiting the pivoting motion of the squab assembly 2. The pivot bracket 51 comprises first and second prongs 52, 53 angularly offset from each other to define a pivot range for the squab assembly 2. As shown most clearly in Figure 8, the first and second prongs 52, 53 locate on diametrically opposed sides of a spindle 54 on which the second output pinion gear 34 is mounted. The first and second prongs 52, 53 remain spaced apart from the spindle 54 in normal use. However, if the deformable link 30 is deformed, one of the first and second prongs 52, 53 may come into contact with the spindle 54 thereby limiting further pivoting movement of the squab assembly 2 in that direction. It will be appreciated therefore that the first and second prongs 52, 53 function as stop members to limit pivoting movement of the squab assembly 2. In certain embodiments, the squab assembly 2 may engage with the second output pinion gear 34 to inhibit rotation thereof and to avoid a drop in the vertical height of the chassis 7.

As shown in Figure 2B, first and second guard members 55, 56 are disposed on the inner sides of the first and second lateral members 16, 17. The first guard member 55 may help to inhibit deformation of the constraining member 44. Alternatively or in addition, the first and second prongs 52, 53 may also contact the respective first and second guard members 55, 56 rather than the spindle 54.

The operation of the vehicle seat assembly 1 will now be described with reference to the figures. In normal use, the first drive motor 27 is operable to adjust the recline angle of the squab assembly 2. The first drive motor 27 drivingly rotates the first output pinion gear 28 which meshes with the first drive rack 29 disposed on the deformable link 30. The resulting rotational movement of the first drive rack 29 rotates the first torsion tube 11 about the pivot axis A. The rotation of the first torsion tube 11 transmits torque to the first mounting plate 12 causing the squab assembly 2 to pivot about the pivot axis A. The first drive motor 27 may be reversed to change the rotational direction of the first output pinion gear 28, thereby enabling the recline angle of the squab assembly 2 to be increased or decreased.

The second drive motor 33 is operable to adjust the rise height of the base assembly 3. The second drive motor 33 drivingly rotates the second output pinion gear 34 which drives the second drive rack causing the drive arm 35 to pivot about the pivot axis A. The resulting rotation of the second torsion tube 18 changes the geometry of the base assembly 3 causing the rise height to increase or decrease depending on the direction of rotation of the second drive motor 33.

The third drive motor 37 is operable to adjust the longitudinal travel of the base assembly 3 along the rails 8.

In the event of a force being applied to the squab assembly 2, for example a collision force resulting from a dynamic collision event, a torque is applied to the first torsion tube 11 resulting in the application of a shear force on the deformable link 30. If the shear force exceeds a threshold level (determined by the configuration of the deformable link 30), the deformable link 30 is predisposed to undergo plastic deformation. The deformation of the deformable link 30 absorbs collision energy rather than transmitting the loads directly into the base assembly 3 by means of the first output pinion gear 28 (thus reducing load on the first output pinion gear 28). Moreover, deformation of the deformable link 30 provides progressive deceleration of the squab assembly 2, thereby helping to reduce the peak loads transmitted to a seat occupant. As described herein, the deformable link 30 is disposed between the first lateral member 16 and the constraining member 44. Thus, deformable link 30 is constrained so as to undergo in-plane deformation. The reaction surface 47 defined by the constraining member 44 cooperates with the cooperating surface 46 to maintain the first drive rack 29 in engagement with the first output pinion gear 28.

The deformable link 30 rotates about the pivot axis A and the arcuate motion is maintained during deformation by the constraining member 44. The deformable link 30 is configured to deform under bending, reaching the yield stress of the materials resulting in localised plastic (permanent) deformation. The cooperating surface 46 cooperates with the reaction surface 47 of the constraining member 44 to maintain the first drive rack 29 in engagement with the first output pinion gear 28. The engagement of these complementary surfaces maintains the distance between the ends of the deformable link 30 helping to prevent the first drive rack 29 disengaging from the first output pinion gear 28. The deformation of the deformable link 30 allows the first torsion tube 11 to rotate about the pivot axis A. Depending on the direction of rotation of the first torsion tube 11 (determined by the direction of the force applied to the squab assembly 2), one of the first and second prongs 52, 53 disposed on the pivot bracket 51 engages the spindle 54 and inhibits further rotation of the first torsion tube 11. The first and second prongs 52, 53 thereby provide functional end stops for limiting angular rotation of the squab assembly 2.

The first and second guard members 55, 56 define end stops for the squab assembly 2. The first guard member 55 has upper and lower first flanges 55U, 55L arranged to cooperate with the deformable link 30 and/or the drive rack 29 and/or the constraining member 44 to limit angular rotation of the squab assembly 2. Similarly, the second guard member 56 has upper and lower second flanges 56U, 56L arranged to cooperate with the outer edges of the first and second prongs 52, 53 to limit angular rotation of the squab assembly 2. It will be appreciated that the angular arrangement of the first and second prongs 52, 53 may define positive and negative lockout angles for the squab assembly 2. The lockout angle may be adjusted to provide a range of +ve and -ve rotation with maximum total angle determining the freedom of the deformable link 30 and/or the drive rack 29 between the upper and lower first flanges 55U, 55L.

The deformable link 30 provides progressive deformation under load. After deformation of the deformable link 30 by a predetermined amount, the upper and lower flanges 55U, 55L, 56U, 56L function as stop members and transmit energy into the remainder of the structure. The deformable link 30 helps to maintain geometrical integrity in strategic locations within the vehicle seat assembly (for example the seat squab for neck and spinal support) whilst allowing controlled deformation in less sensitive areas (for example the chassis 7 under the seat cushion pan and/or in the region proximal to the first and second torsion tubes 11, 18).

The arrangement of the chassis 7 described herein is such that its width may be adjusted with relative ease. Thus, the vehicle seat assembly 1 may be reconfigured to accommodate different widths of seats. For example, the vehicle seat assembly 1 may be reconfigured to suit different sizes of the seat pan.

It will be appreciated that the deformable link 30 may be configured to undergo deformation under a predetermined load. Moreover, the spacing of the first and second prongs 52, 53 may be adjusted to determine the range of rotational movement of the squab assembly 2. It will be appreciated that the pivot bracket 51 may have more than two prongs.

The deformation of the deformable link 30 provides a visual indication that an excessive load has been applied to the vehicle seat assembly 1. This may not otherwise be readily determined by inspection of the squab assembly 2, particularly if the squab assembly 2 incorporates a composite structure. The deformable link 30 may be replaced, for example as a service item. In certain embodiments, the deformable link 30 may be configured such that deformation indicates that the squab assembly 2 should be inspected and/or replaced. The deformable link 30 may optionally comprise one or more mark, for example a series of timing marks, for providing a visual indication that deformation has occurred and optionally also the extent of any such deformation. The one or more mark may be viewed to facilitate determining that deformation had occurred, for example to highlight when the deformable link 30 has undergone only slight deformation. The one or more mark may be visually inspected by removing the first guard member 56. In certain embodiments, the one or more mark may be visible through an aperture (not shown) in the first guard member 56.

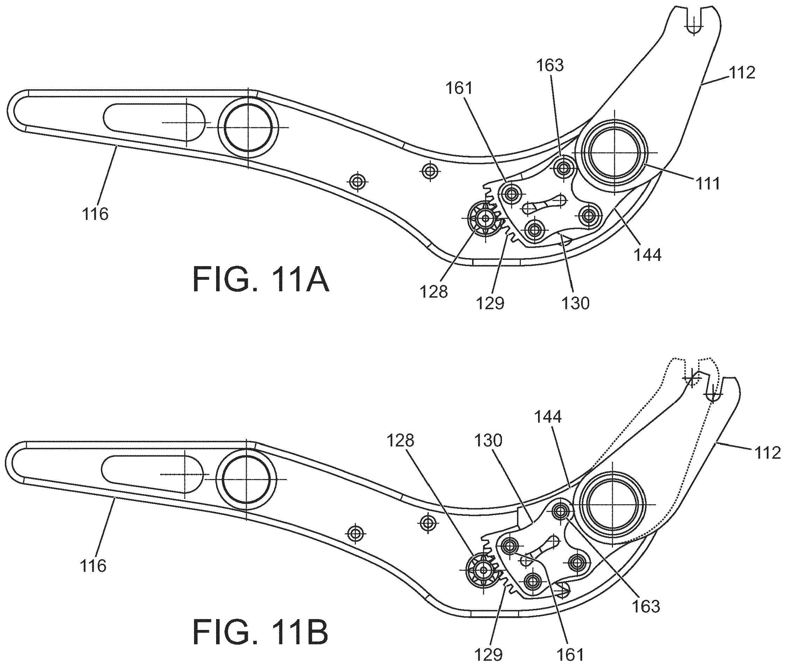

A second embodiment of the present invention, as shown in Figures 11A to 14, comprises substantially the same seat assembly arrangement as the first embodiment of the present invention. As in the first embodiment, the second embodiment comprises a chassis; a backrest support pivotally mounted to the chassis; and a recline control mechanism comprising a pinion gear and a drive rack; wherein the recline control mechanism comprises a deformable link connected to the drive rack for controlling the transmittal of a force from the backrest support to the chassis.

Features in the second embodiment which correspond to equivalent features in the first embodiment are given the same reference numeral as the reference numeral given to that feature in the first embodiment with the addition of the prefix 1. For example, a deformable link in the second embodiment which corresponds to deformable link 30 of the first embodiment is given reference numeral 130.

Figures 11A to 14 show a deformable link 130 fastened at a first end to a drive rack 129, for example, by at least one first bolt 161, and fastened at a second end to a constraining member 144, for example, by at least one second bolt 163. The constraining member 144 may comprise at least one aperture 169.

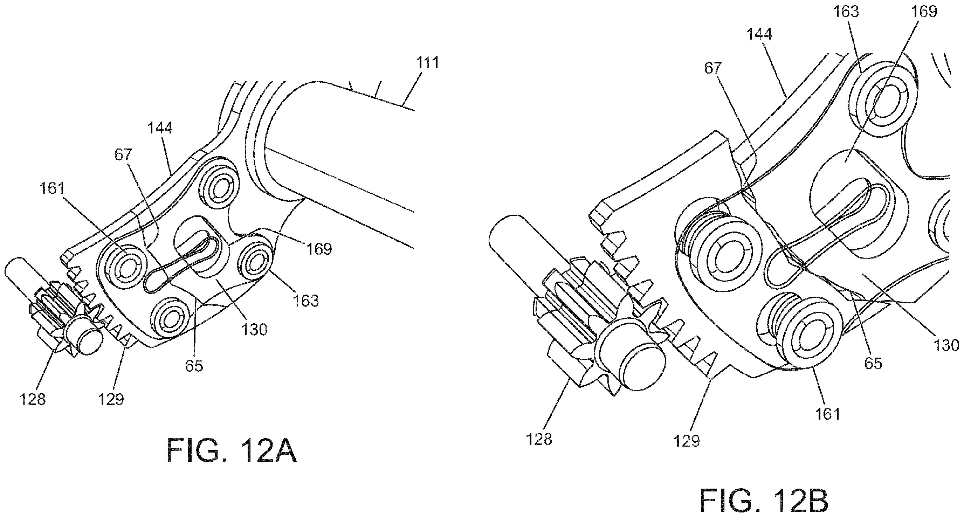

As shown in Figures 12A and 12B first detent features 65 are provided on the constraining member 144 and second detent features 67 are provided on the drive rack 129. The first detents 65 and the second detents 67 engage with each other under normal load conditions, as shown in Figure 12A.

The detent features stabilise the mechanism under lower load conditions, reducing the likelihood of relative movement between the drive rack 129 and the constraining member 144.

As shown in Figure 12B, the first detents 65 and the second detents 67 are configured to disengaged with each other during high load conditions above a predetermined load.

The size, shape, and number of the first and second detents can be tuned to the elongation characteristics of the deformable links to provide a discrete detent release torque value. This reduces the likelihood that the deformable link 130 will deform over time due to the application of low loads to the backrest support of the vehicle seat assembly.

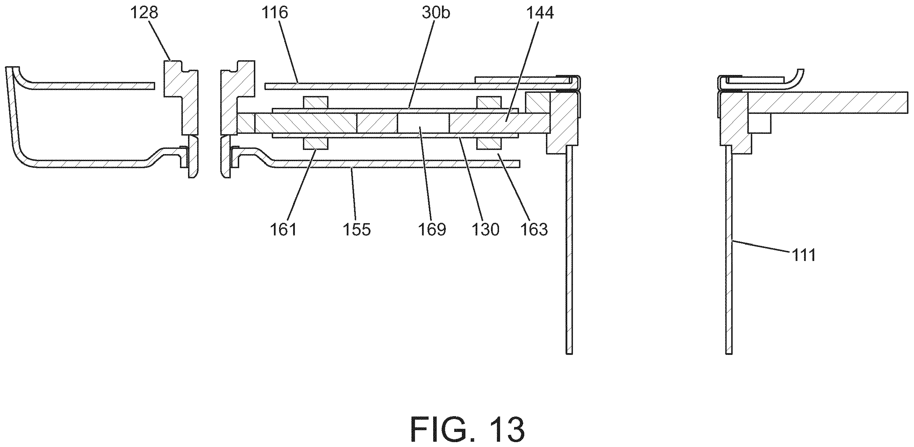

Figure 13 shows a cross sectional view of the deformable link assembly of Figures 11A and 11B. A leading edge of the constraining member 144 defines a reaction surface 147 for cooperating with cooperating surface 146. Cooperating surface 146 is defined by an edge of the first drive rack 129. The constraining member 144 may sit flush with the drive rack 129 and the deformable link 130 may be disposed adjacent to the drive rack 129 and the constraining member 144 on a first side. A second deformable link 30b may be disposed adjacent to the drive rack 129 and the constraining member 144 on a second side.

As shown in Figure 11B, in the event of a force above a tuned threshold being applied to the squab assembly, the constraining member 144 move in an arcuate motion with respect to drive rack 129. The deformable link 130 being attached to both the constraining member 144 and the drive rack 129 is deformed by the relative movement between the constraining member 144 and the drive rack 129, but continue to hold the constraining member 144 and the drive rack 129 in radial contact. The deformable link 130 continues to hold the drive rack 144 in radial contact.

A further advantage of the detent features 65, 67 is that when relative movement occurs between constraining member 144 and the drive rack 129, the detents cause the rack pinion to be pushed further into engagement with the motor pinion due to the increase in effective radius of the assembly, reducing the likelihood of rack to pinion tooth slipping.

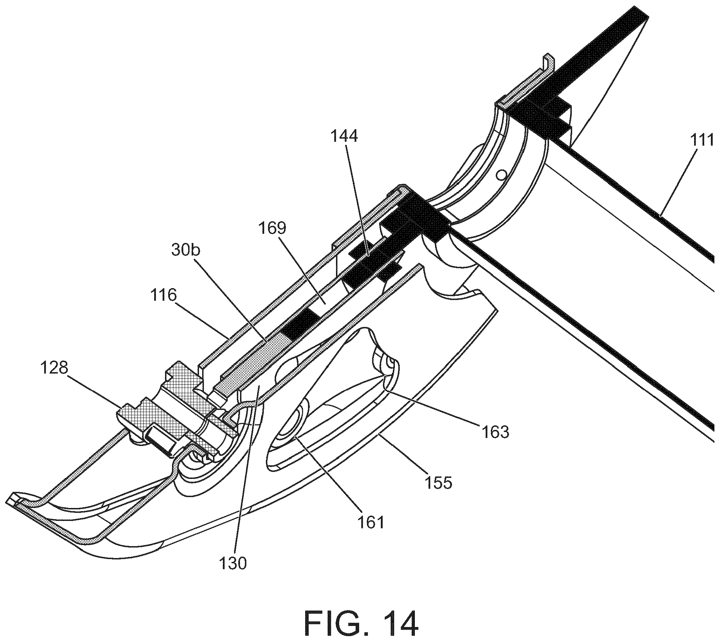

As can be seen in Figure 14, drive rack 129 abuts the first output pinion gear 128. As can also be seen in Figure 14, bolt 161 fastens the first end of deformable link 130 to drive rack 129 and bolt 163 fastens the second end of deformable link 130 to constraining member 144. A guard member 155 surrounds the assembly and may limit the arcuate motion of the constraining member 144 and/or limit out-of-plane deformation of deformable links 130 and 30b. In some examples, seat members may define the stop limit shell 65.

The guard member 155 may be a single member or may be modular. In some examples, seat members may define at least part of the guard member 155.

It will be appreciated that guard member 155, as shown in Figure 14, is the guard member that corresponds to the first lateral frame member 116 and that a guard member which corresponds to the second lateral frame member may be a substantially mirror image of guard member 55 as shown in Figure 14.

It will be appreciated that various changes and modifications may be made to the vehicle seat assembly 1 described herein without departing from the object of the invention as claimed. Alternatives to the deformable link include clamped friction plates configured to slide relative to each other; or twisting of a lever around a friction pivot.

It will be appreciated also that the deformable link 30, 130 described herein may be incorporated into other control functions in the vehicle seat assembly 1. For example, the deformable link may be disposed between the second torsion tube 18 and the second output pinion gear 34. A second drive rack may be associated with the second output pinion gear 34. In this arrangement, the deformable link would be integrated into the height rise function.

It will be appreciated that the detent features 65 and 67 of the embodiment of Figures 11A to 14 could also be applied to the embodiment of Figures 5 to 10.

## Claims

1. A vehicle seat assembly (1) comprising:
a chassis (7);
a backrest support (5) pivotally mounted to the chassis (7);
a recline control mechanism (26) comprising a pinion gear (28) and a drive rack (29); and
reaction means for maintaining engagement of the drive rack with the pinion gear;
**characterised in that** the recline control mechanism (26) comprises a deformable link (30) connected to the drive rack (29) for controlling the transmittal of a force from the backrest support (5) to the chassis (7).

2. A vehicle seat assembly (1) as claimed in claim 1, wherein the drive rack (29) is fixedly mounted to the deformable link (30).

3. A vehicle seat assembly (1) as claimed in any one of the preceding claims, wherein the deformable link (30) is a metal plate.

4. A vehicle seat assembly (1) as claimed in any one of the preceding claims, wherein the chassis (7) comprises a first lateral frame member (16), the deformable link (30) being disposed adjacent to said first lateral frame member (16).

5. A vehicle seat assembly as claimed in any one of the preceding claims comprising at least one constraining member (44) for constraining out-of-plane deformation of the deformable link (30).

6. A vehicle seat assembly as claimed in claim 5 when dependent on claim 4, wherein the deformable link (30) is disposed between said at least one constraining member (44) and the first lateral frame member (16).

7. A vehicle seat assembly as claimed in claim 5 or claim 6, wherein the at least one constraining member forms said reaction means.

8. A vehicle seat assembly as claimed in any of the preceding claims, wherein said reaction means comprises a reaction surface for cooperating with the drive rack.

9. A vehicle seat assembly (1) as claimed in claim 8, wherein said reaction surface has an arcuate profile for cooperating with a complementary surface of the drive rack (29).

10. A vehicle seat assembly (1) as claimed in claim 9, wherein the reaction surface comprises first detents and the cooperating surface comprises second detents, the first and second detents being arranged to engage, beneath a predetermined load, to retain the constraining member (44) and the drive rack in contact.

11. A vehicle seat assembly (1) as claimed in claim 10, wherein the first detents and the second detents are arranged to disengage upon application of a predetermined load.

12. A vehicle seat assembly (1) as claimed in any one of the preceding claims comprising means for limiting pivoting movement of the backrest support (5) relative to the chassis (7).

13. A vehicle seat assembly (1) as claimed in any one of the preceding claims, wherein the backrest support (5) is pivotable about a pivot axis, the pivot axis being disposed below an H-Point of a seat occupant,

14. A vehicle seat assembly (1) as claimed in any one of the preceding claims, wherein the chassis (7) comprises a first torsion tube (11) and the backrest support (5) comprises a second torsion tube (18); the first and second torsion tubes (11, 18) being arranged concentrically about a pivot axis.

15. A vehicle comprising at least one vehicle seat assembly according to any preceding claim.

## Patentansprüche

1. Fahrzeugsitzanordnung (1), Folgendes umfassend:
ein Fahrgestell (7);
einen Rückenlehnenträger (5), der schwenkbar an dem Fahrgestell (7) gelagert ist; und
einen Lehnsteuermechanismus (26), umfassend ein Zahnradgetriebe (28) und einen Zahnstangenantrieb (29);
Reaktionsmittel zum Aufrechterhalten des Eingriffs des Zahnstangenantriebs mit dem Zahnradgetriebe;
**dadurch gekennzeichnet, dass** der Lehnsteuermechanismus (26) eine verformbare Verbindung (30) umfasst, die mit dem Zahnstangenantrieb (29) verbunden ist, um die Übertragung einer Kraft von dem Rückenlehnenträger (5) auf das Fahrgestell (7) zu steuern.

2. Fahrzeugsitzanordnung (1) nach Anspruch 1, wobei der Zahnstangenantrieb (29) fest an der verformbaren Verbindung (30) gelagert ist.

3. Fahrzeugsitzanordnung (1) nach einem der vorhergehenden Ansprüche, wobei die verformbare Verbindung (30) eine Metallplatte ist.

4. Fahrzeugsitzanordnung (1) nach einem der vorhergehenden Ansprüche, wobei das Fahrgestell (7) ein erstes seitliches Rahmenelement (16) umfasst, wobei die verformbare Verbindung (30) angrenzend an dem ersten seitlichen Rahmenelement (16) angeordnet ist.

5. Fahrzeugsitzanordnung nach einem der vorhergehenden Ansprüche, umfassend wenigstens ein Begrenzungselement (44) zum Beschränken einer ebenenverschobenen Verformung der verformbaren Verbindung (30).

6. Fahrzeugsitzanordnung nach Anspruch 5, wenn abhängig von Anspruch 4, wobei die verformbare Verbindung (30) zwischen wenigstens einem Begrenzungselement (44) und dem ersten seitlichen Rahmenelement (16) eingerichtet ist.

7. Fahrzeugsitzanordnung nach Anspruch 5 oder 6, wobei wenigstens ein Begrenzungselement das Reaktionsmittel ausbildet.

8. Fahrzeugsitzanordnung nach einem der vorangehenden Ansprüche, wobei das Reaktionsmittel eine Reaktionsoberfläche zum Zusammenwirken mit dem Zahnstangenantrieb umfasst.

9. Fahrzeugsitzanordnung (1) nach Anspruch 12, wobei die Reaktionsoberfläche ein bogenförmiges Profil zum Zusammenwirken mit einer komplementären Oberfläche des Zahnstangenantriebs (29) aufweist.

10. Fahrzeugsitzanordnung (1) nach Anspruch 9, wobei die Reaktionsoberfläche erste Arretierungen umfasst und die Zusammenwirkoberfläche zweite Arretierungen umfasst, wobei die ersten und zweite Arretierungen derart angeordnet sind, dass sie unter einer vorbestimmten Last einrasten, um das Begrenzungselement (44) und den Zahnstangenantrieb in Kontakt zu halten.

11. Fahrzeugsitzanordnung (1) nach Anspruch 10, wobei die ersten Arretierungen und die zweiten Arretierungen derart angeordnet sind, dass sie sich beim Anwenden einer bestimmten Last trennen.

12. Fahrzeugsitzanordnung (1) nach einem der vorhergehenden Ansprüche, umfassend Mittel zum Begrenzen der Schwenkbewegung des Rückenlehnenträgers (5) gegenüber dem Fahrgestell (7).

13. Fahrzeugsitzanordnung (1) nach einem der vorhergehenden Ansprüche, wobei der Rückenlehnenträger (5) um eine Schwenkachse schwenkbar ist, wobei die Schwenkachse sich unterhalb eines H-Punkts eines Sitzinsassen befindet.

14. Fahrzeugsitzanordnung (1) nach einem der vorhergehenden Ansprüche, wobei das Fahrgestell (7) ein erstes Torsionsrohr (11) umfasst und der Rückenlehnenträger (5) ein zweites Torsionsrohr (18) umfasst;
wobei das erste und das zweite Torsionsrohr (11, 18) konzentrisch um eine Schwenkachse herum angeordnet sind.

15. Fahrzeug, umfassend wenigstens eine Fahrzeugsitzanordnung nach einem der vorhergehenden Ansprüche.

## Revendications

1. Ensemble de siège de véhicule (1) comprenant :
un châssis (7) ;
un support de dossier (5) monté pivotant sur le châssis (7) ;
un mécanisme de commande d'inclinaison (26) comprenant un pignon (28) et une crémaillère d'entraînement (29) ;
et
des moyens de réaction pour maintenir l'engagement de la crémaillère d'entraînement avec le pignon ;
**caractérisé en ce que** le mécanisme de commande d'inclinaison (26) comprend un maillon déformable (30) relié au rack d'entraînement (29) pour commander la transmission d'une force du support de dossier (5) au châssis (7).

2. Siège de véhicule (1) selon la revendication 1, **caractérisé en ce que** la crémaillère d'entraînement (29) est montée de manière fixe sur la liaison déformable (30).

3. Assemblage de siège de véhicule (1) tel que revendiqué dans l'une quelconque des revendications précédentes, dans lequel la liaison déformable (30) est une plaque métallique.

4. Assemblage de siège de véhicule (1) tel que revendiqué dans l'une quelconque des revendications précédentes, dans lequel le châssis (7) comprend un premier élément de cadre latéral (16), la liaison déformable (30) étant disposée adjacente audit premier élément de cadre latéral (16).

5. Assemblage de siège de véhicule tel que revendiqué dans l'une quelconque des revendications précédentes comprenant au moins un élément de contrainte (44) pour limiter la déformation hors plan de la liaison déformable (30).

6. Assemblage de siège de véhicule selon la revendication 5 lorsqu'il dépend de la revendication 4, dans lequel la liaison déformable (30) est disposée entre ledit au moins un élément de contrainte (44) et le premier élément de cadre latéral (16).

7. Assemblage de siège de véhicule selon la revendication 5 ou la revendication 6, dans lequel l'au moins un élément contraignant forme ledit moyen de réaction.

8. Assemblage de siège de véhicule tel que revendiqué dans l'une quelconque des revendications précédentes, dans lequel ledit moyen de réaction comprend une surface de réaction pour coopérer avec la crémaillère d'entraînement.

9. Assemblage de siège de véhicule (1) selon la revendication 8, dans lequel ladite surface de réaction a un profil arqué pour coopérer avec une surface complémentaire de la crémaillère d'entraînement (29).

10. Assemblage de siège de véhicule (1) selon la revendication 9, dans lequel la surface de réaction comprend des premiers crans et la surface de coopération comprend des seconds crans, les premier et second crans étant agencés pour venir en prise, sous une charge prédéterminée, pour maintenir l'élément de contrainte (44) et le crémaillère d'entraînement en contact.

11. Assemblage de siège de véhicule (1) selon la revendication 10, dans lequel les premiers crans et les seconds crans sont agencés pour se désengager après application d'une charge prédéterminée.

12. Ensemble de siège de véhicule (1) tel que revendiqué dans l'une quelconque des revendications précédentes comprenant des moyens pour limiter le mouvement de pivotement du support de dossier (5) par rapport au châssis (7).

13. Assemblage de siège de véhicule (1) selon l'une quelconque des revendications précédentes, dans lequel le support de dossier (5) peut pivoter autour d'un axe de pivotement, l'axe de pivotement étant disposé sous un point H d'un occupant du siège,

14. Assemblage de siège de véhicule (1) selon l'une quelconque des revendications précédentes, dans lequel le châssis (7) comprend un premier tube de torsion (11) et le support de dossier (5) comprend un deuxième tube de torsion (18) ; les premier et deuxième tubes de torsion (11, 18) étant disposés concentriquement autour d'un axe de pivotement.

15. Véhicule comprenant au moins un ensemble de siège de véhicule selon toute revendication précédente.
